# EUROPÄISCHE PATENTSCHRIFT

(11) **EP 0 699 100 B1**
(45) Veröffentlichungstag und Bekanntmachung des Hinweises auf die Patenterteilung: **06.08.1997**
(21) Anmeldenummer: 94916962.7
(22) Anmeldetag: 13.05.1994
(51) Int. Cl.: B01D 17/05, B01D 17/02, B01D 17/038

(54) **VERFAHREN ZUR ENTWÄSSERUNG VON ALTÖL UNTER VERWENDUNG KATIONISCHER AMINVERBINDUNGEN**
METHOD OF REMOVING WATER FROM WASTE OIL USING CATIONIC AMINO COMPOUNDS
PROCEDE POUR LA DESHYDRATATION D'HUILES USEES AU MOYEN DE COMPOSES AMINES CATIONIQUES

(30) Priorität: 21.05.1993 DE 4317047
(43) Veröffentlichungstag der Anmeldung: 06.03.1996
(73) Patentinhaber: Henkel Kommanditgesellschaft auf Aktien, 40191 Düsseldorf (DE)
(72) Erfinder: SPEI, Brigitte, D-40589 Düsseldorf (DE); JONKE, Hermann, D-40231 Düsseldorf (DE)
(86) Internationale Anmeldenummer: EP9401556
(87) Internationale Veröffentlichungsnummer: WO9427703

(56) Entgegenhaltungen:
- EP-A- 0 196 886
- EP-A- 0 277 060
- EP-A- 0 404 370
- EP-A- 0 441 198
- DE-A- 4 009 760
- DE-A- 4 040 022
- DE-A- 4 126 914

## Beschreibung

Die Erfindung betrifft ein Verfahren zur Entwässerung von technischem Altöl, bei dem es sich entweder um eine Öl-in-Wasser-Emulsion oder um eine Wasser-in-Öl-Emulsion handelt und die jeweils zu mindestens 15 % aus Öl besteht. Solche Emulsionen fallen bei der Aufarbeitung technischer Öl-in-Wasser-Emulsionen an, beispielsweise durch Aufrahmung in einer mechanischen Abscheidevorrichtung, durch Anreicherung mittels Membranfiltrationsprozesse oder als Folge einer Primärspaltung.

Verbrauchte und zu entsorgende Öl-in-Wasser-Emulsionen fallen in der metallverarbeitenden Industrie in großen Mengen an. Eine Quelle hierfür sind Kühlschmierstoffemulsionen, die bei spanabhebender Metallbearbeitung eingesetzt werden und die einen Ölgehalt von etwa 2 - 5 % aufweisen. Auch wenn solche Emulsionen längere Zeit - bis zu mehreren Monaten - verwendet werden können, sind sie dennoch schließlich verbraucht und müssen entsorgt werden. Eine weitere Quelle von Abfallemulsionen sind beispielsweise technische Entfettungs- und Reinigungsbäder, die während ihrer Betriebszeit durch eingetragenes Öl einen Ölgehalt von etwa 1 - 5 % aufbauen und die kontinuierlich entölt und/oder am Ende ihrer Gebrauchsfähigkeit diskontinuierlich entsorgt werden müssen. Abfallemulsionen der genannten Art stellen Öl-in-Wasser-Emulsionen dar. Die Aufarbeitung und Entsorgung beginnt in der Regel damit, daß man eine Aufkonzentrierung oder eine Primärspaltung in eine wasserreiche und in eine ölreiche Phase durchführt.

Eine solche Phasentrennung erfolgt beispielsweise in mechanischen Abscheidevorrichtungen von Abwasseranlagen durch Einwirkung der Schwerkraft selbsttätig, wobei ein "Altöl" in Form einer ölreichen Öl-in-Wasser-Emulsion mit einem Ölgehalt von über 15 Gew.-% aufrahmt. Eine weitere Möglichkeit einer Primärtrennung besteht darin, daß man die Emulsion einer Membranfiltration, beispielsweise einer Mikro- oder Ultrafiltration unterwirft und sie in ein ölreiches Retentat mit einem Ölgehalt über 15 Gew.-% sowie in ein praktisch ölfreies Permeat aufspaltet. In diesen beiden Fällen liegt nach dem jeweils ersten Trennungsschritt eine ölreiche Öl-in-Wasser-Emulsion vor.

Die Primärspaltung kann, wie in DE-A-41 26 914 beschrieben, durch eine elektrolytische Ladungsneutralisierung der Öltröpfchen erfolgen. Eine thermische Spaltung durch Erhitzen der Abfallemulsion ist ebenfalls möglich, wegen des hohen Energiebedarfs aber wenig gebräuchlich. Häufig beginnt die Aufarbeitung von Abfallemulsionen damit, daß man die Emulsion einer Primärspaltung mit chemischen Emulsionsspaltern unterwirft. Für eine chemische Emulsionsspaltung kommen entweder starke Säuren, anorganische Salze und/oder organische Emulsionsspalter in Betracht. Die organischen Emulsionsspalter, die häufig aus kationischen Polymeren bestehen, haben den großen Vorteil, daß sie bei der Spaltung in der Ölphase verbleiben und dadurch nicht zu einer weiteren Verunreinigung der Wasserphase beitragen und keine zusätzlichen Schlämme erzeugen.

Emulsionsspalter für eine solche Primärspaltung sind in großer Zahl im Stand der Technik bekannt, beispielsweise nennt die DE-A-40 09 760 synthetische Polymere auf Basis von Polyiminen, Polyetherpolyaminen, Polyaminen und Polyamidaminen oder quarternierten Polyaminen und quarternierten Polyamidaminen, ferner kationische Copolymere aus Acrylamid und unterschiedlichen Anteilen kationischer Monomere bzw. Oligomere und Homopolymerisate von Dimethyldiallylammoniumchlorid. Hiervon haben sich organische kationische Emulsionsspalter auf Basis von Polyaminen, Polyiminen, Polyetherpolyaminen und Polyamidaminen besonders bewährt.

Die DE-A-40 09 760 beschreibt einen Zweistufenprozeß zur Primärspaltung einer Öl-in-Wasser-Emulsion unter Einsatz von sowohl anorganischen als auch organischen Emulsionsspaltern. Dabei werden die primär zu spaltenden Emulsionen zunächst mit einem organischen kationischen Emulsionsspalter der vorstehend genannten Art und dann mit einem anorganischen Emulsionsspalter auf Basis von Salzen mehrwertiger Metalle, insbesondere von Aluminium, Eisen und Calcium, versetzt. Nach Abtrennen der aufrahmenden Ölphase wird die noch einen geringen Rest-Kohlenwasserstoffgehalt aufweisende Wasserphase einem zweiten Spaltschritt mit einem weiteren anorganischen Emulsionsspalter gefolgt von einem organischen anionischen Emulsionsspalter unterworfen.

Die bei einer chemischen Primärspaltung abgeschiedene Ölphase liegt in der Regel als eine Wasser-in-Öl-Emulsion mit einem Ölgehalt von mehr als 15 Gew.-% vor. Wenn man diese bei der Primärspaltung entstehende Wasser-in-Öl-Emulsion aufarbeiten, deponieren oder verbrennen möchte, erweist sich der Restwassergehalt als hinderlich oder zumindest als kostentreibend. Daher ist es im allgemeinen vorteilhaft, diese Emulsion durch eine Sekundärspaltung weitergehend von Wasser zu befreien. Die sich hierdurch stellende Aufgabe der weiteren Entwässerung ist verwandt mit dem Problem der Entwässerung von Rohölemulsionen, die bei der Erdölförderung entweder direkt oder als Folge einer tensidunterstützten Tertiärförderung anfallen. Wie die DE-A-40 40 022 hierzu ausführt, ist die aufgabengemäß durchzuführende Sekundärspaltung eines technischen Altöls nicht mit der Spaltung einer Rohölemulsion zu vergleichen. Dies hängt damit zusammen, daß die Stabilisatoren der Emulsionen in den beiden Fällen sehr große Unterschiede aufweisen. Erkenntnisse aus der Spaltung von Rohölemulsionen lassen sich daher nur sehr eingeschränkt auf die Spaltung von technischen Altölemulsionen übertragen. Gemäß dem Vorschlag der DE-A-40 40 022 entwässert man technische Wasser-in-Öl-Emulsionen, bei denen es sich um die Ölphase einer primär gespaltenen Öl-in-Wasser-Emulsion handelt, dadurch, daß man Polymere und/oder Oligomere aus Ethylenoxid und/oder 1,2-Propylenoxid, oxalkylierte Phenolharze, mit Diisocyanaten, Dicarbonsäuren, Formaldehyd und/oder Diglycidylether vernetzte Block- oder Mischpolymere von Ethylen und 1,2-Propylenoxid, Polyetherurethane und/oder Alkylbenzolsulfonsäuresalze als Spalter einsetzt. Diese Lehre ist auf die Spaltung von Wasser-in-Öl-Emulsionen beschränkt. Es werden keine Hinweise darauf gegeben, daß die genannten Sekundärspalter auch für die Entwässerung von ölreichen Öl-in-Wasser-Emulsionen mit Ölgehalten von mehr als 15 Gew.-% anwendbar sind, wie sie beispielsweise in Form von "Altölen" oder als Retentate von Membranfiltrationsprozessen anfallen können.

Ferner wird in der EP-A-0 196 886 ein Verfahren zur Spaltung von Öl-in-Wasser-Emulsionen beschrieben, wobei als Demulgator ein wasserlösliches Polymer des Monoallylamins Verwendung findet. Gemäß den Beispielen werden O/W-Emulsionen behandelt, die 2 Gew.-% Öl enthalten. Das Verfahren ist geeignet zur Behandlung einer Vielzahl von O/W-Emulsionen, beispielsweise auch solchen, die in der metallverarbeitenden Industrie anfallen.

Die EP-A-0 277 060 betrifft die Spaltung von Wasser-in-Öl-Emulsionen, die bei der Förderung und Weiterverarbeitung von rohem Erdöl anfallen. Dem Rohöl oder dem Entsalzungswasser wird als Demulgator eine Kombination, bestehend aus einem quarternären Tetraalkylammoniumhalogenid, das einem Alkylrest mit 12 bis 20 C-Atomen aufweist, und einem polyalkoxylierten Alkylendiamin, zugefügt.

Die EP-A-0 404 370 beschreibt ein Verfahren zur Spaltung von Emulsionen, vorzugsweise Öl-in-Wasser-Emulsionen, die bei der Herstellung von Pharmazeutika mittels Fermentations-Prozessen anfallen. Hierbei kommen als Demulgtatoren unter anderen quaternierte polyoxyalkylierte Amine mit 6 bis 30 C-Atomen oder deren Salze sowie Polydialkyldiallylammoniumsalze in Frage.

Da zum einen die bei der Primärspaltung anfallenden Wasser-in-Öl-Emulsionen in der Regel durch sehr unterschiedliche Stabilisatorsysteme stabilisiert sind und zum anderen sich auch die Aufgabe einer weiteren Entwässerung von aufkonzentrierten Öl-in-Wasser-Emulsionen stellt, besteht ein Bedarf an breiter einsetzbaren Entwässerungsmitteln, die sich für unterschiedliche Stabilisatorsysteme und sowohl für Wasser-in-Öl-Emulsionen als auch für Öl-in-Wasser-Emulsionen mit Ölgehalten von jeweils mehr als 15 Gew.-% eignen. Es ist die Aufgabe der vorliegenden Erfindung, solche breiter einsetzbaren Entwässerungsmittel zur Verfügung zu stellen.

Diese Aufgabe wird erfindungsgemäß gelöst durch ein Verfahren zur Entwässerung von technischen Altölen, die Wasser-in-Öl-Emulsionen oder Öl-in-Wasser-Emulsionen mit einem Ölgehalt von größer als 15 Gew.-% darstellen und bei der Aufarbeitung technischer Öl-in-Wasser-Emulsionen durch Aufrahmung in einer mechanischen Abscheidevorrichtung, durch Anreicherung mittels Membranfiltrationsprozesse oder durch Primärspaltung als ölreiche Phase anfallen, dadurch gekennzeichnet, daß man eine oder mehrere kationische Aminverbindungen aus den Gruppen
A) Quartäre Pyridinium- oder Ammoniumsalze oder Betaine mit mindestens einem Alkylrest mit 6 bis 22 C-Atomen,
B) Tertiäre oder quarternäre Polyamine mit mittleren Molmassen zwischen 50 000 und 250 000 Dalton
in der Emulsion verteilt und eine Phasentrennung herbeiführt.

Die unter A) und B) genannten Produktgruppen sind als solche bekannt. In bevorzugten Ausführungsformen betrifft die Erfindung
Verfahren, bei denen die Verbindungen aus der Gruppe A) ausgewählt sind aus N-Alkylpyridiniumsalzen mit einem Alkylsubstituenten mit 10 bis 16 C-Atomen, Trimethylalkylammoniumsalzen mit einem Alkylrest mit 10 bis 18 C-Atomen, Dimethylbenzylalkylammoniumsalzen mit einem Alkylrest mit 10 bis 16 C-Atomen, Dimethyldialkylammoniumsalzen mit zwei gleichen oder unterschiedlichen Alkylresten mit jeweils 6 bis 12 C-Atomen sowie Dimethylalkylammoniumbetainen mit einem Alkylrest mit 8 bis 18 C-Atomen,
   sowie
Verfahren, bei denen die Verbindungen aus der Gruppe B) ausgewählt sind aus Polymeren mit den Baugruppen 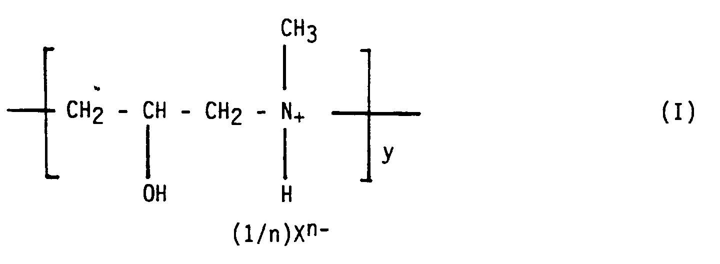 und/oder 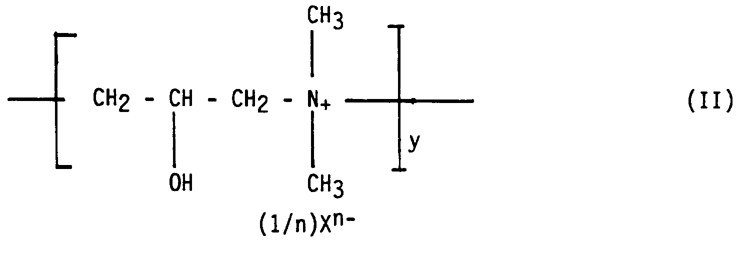 wobei Xⁿ⁻ ein einfach, zweifach oder dreifach negativ geladenes vorzugsweise anorganisches Anion, insbesondere Cl⁻, Hydrogensulfat, Sulfat, Phosphat oder Mono- oder Dihydrogenphosphat bedeutet.

Die für eine gegebene Entwässerungsaufgabe am besten geeigneten Entwässerungsmittel oder deren Kombinationen sowie ihre optimalen Konzentrationen müssen jeweils probenspezifisch bestimmt werden. Sie richten sich nach dem Wassergehalt der Proben, nach dem Verteilungsgrad der Emulsion, sowie der Art und der Menge der anwesenden Stabilisatoren. Im allgemeinen sind Mengen zwischen 5 ppm und 60000 ppm, bezogen auf die Gesamtmenge der zu entwässernden Flüssigkeit, wirksam. Vorzugsweise arbeitet man im Konzentrationsbereich zwischen 100 ppm und 30000 ppm. Der Dosierungsendpunkt für die Entwässerungsmittel läßt sich in günstigen Fällen an einer Änderung des optischen Aussehens der zu entwässernden Emulsion erkennen. Einen Hinweis auf die Erreichung des Dosierendpunktes kann auch die Leistungsaufnahme des Rührwerks liefern, die bei der optimalen Dosierung ein Minimum aufweist. Im allgemeinen Fall ist es jedoch vorzuziehen, den Endpunkt der Dosierung durch Viskositätsmessungen zu ermitteln. Die Viskosität der zu entwässernden Emulsion weist bei der optimalen Dosierung des Entwässerungsmittels ein Minimum auf. Dabei ist es gleichgültig, nach welchem der bekannten Verfahren die Viskositätsermittlung erfolgt. Aus Gründen der einfachen Handhabung setzt man vorzugsweise die Viskositätsbestimmung nach Brookfield ein.

In speziellen Fällen kann es vorteilhaft sein, die erfindungsgemäßen Entwässerungsmittel mit weiteren Entwässerungsmitteln zu kombinieren, wobei die Entwässerungsmittel aus den einzelnen Gruppen gleichzeitig oder vorzugsweise nacheinander der zu entwässernden Emulsion zugesetzt werden. Beispielsweise lassen sich die Entwässerungsmittel der Gruppe(n) A) und/oder B) kombinieren mit Ethoxylierungsprodukten von Fettaminen oder Fettalkoholen mit 10 bis 18, vorzugsweise 12 bis 16 C-Atomen mit 5 bis 29 Mol Ethylenoxid und aus Ethoxylierungs-/Propoxylierungsprodukten von Fettaminen oder Fettalkoholen mit 10 bis 18, vorzugsweise 10 bis 16 C-Atomen mit 4 bis 10 Mol Ethylenoxid gefolgt von 1 bis 4 Mol Propylenoxid, wobei es sich bei den Fettalkoholen oder Fettaminen vorzugsweise um gesättigte Verbindungen und um Produktgemische handelt, wie sie aus natürlichen Fetten und Ölen erhalten werden, und die Alkylenoxidketten mit konventioneller oder mit eingeengter Homologenverteilung vorliegen.

Weiterhin lassen sich die Entwässerungsmittel der Gruppe(n) A) und/oder B) kombinieren mit den in der DE-A-40 40 022 beschriebenen Mitteln: Polymere und/oder Oligomere aus Ethylenoxid und/oder 1,2-Propylenoxid, oxalkylierte Phenolharze, mit Diisocyanaten, Dicarbonsäuren, Formaldehyd und/oder Diglycidether vernetzte Block- oder Mischpolymere von Ethylen- und 1,2-Propylenoxid, Polyetherurethane.

Die Temperatur der zu entwässernden Emulsion wird man einerseits aus Energiespargründen möglichst nahe bei Raumtemperatur wählen, andererseits ist man auf eine hinreichend geringe Viskosität angewiesen. Im allgemeinen wird man die Entwässerung bei Temperaturen zwischen 15 und 95 °C, vorzugsweise zwischen 20 und 80 °C, durchführen.

Zur Durchführung des Verfahrens werden die Entwässerungsmittel nach dem Fachmann hinreichend bekannten Methoden, beispielsweise durch Einrühren, gleichmäßig in der Emulsion verteilt. Die Trennung der Emulsion in eine wasserreiche Phase und in eine entwässerte Ölphase kann unter natürlicher Schwerkrafteinwirkung in geeigneten Sedimentationsbehältern erfolgen. Die Effizienz der Phasentrennung kann durch Verwendung einer kontinuierlich oder chargenweise arbeitenden Zentrifuge gesteigert werden. Sollte die zu entwässernde Emulsion noch sedimentierbare Feststoffanteile enthalten, ist es empfehlenswert, diese vor der Durchführung der Entwässerung abzutrennen, beispielsweise durch Sedimentation, Filtration oder durch Zentrifugieren.

### Beispiele

### Ausführungsbeispiele

Die Entwässerungswirkung der erfindungsgemäßen Produkte nach Tabelle 1 und von Vergleichssubstanzen nach Tabelle 2 wurde an Mischemulsionen aus verbrauchten Kühlschmierstoffemulsionen und verbrauchten Reinigungs- und Entfettungsbädern der Automobilindustrie überprüft. Die genaue Zusammensetzung dieser aus der Fertigungspraxis stammenden Mischemulsionen war nicht bekannt. Erfindungswesentlich ist, daß sie nach der Primärtrennung einen Ölgehalt > 15 Gew.-% aufwiesen. Dabei erfolgte die Primärtrennung der Emulsionen entweder durch chemische Emulsionsspaltung oder durch Ultrafiltration. Die hierbei erhaltenen Flotate bzw. Retentate wurden für die Versuche gemäß Tabellen 3 und 4 eingesetzt. Das Flotat IV war durch Primärspaltung mit einem kationisch modifizierten Polyamin erhalten worden. Die Retentate fielen bei der Ultrafiltration der primären Mischemulsionen durch Polyvinylidendifluorid-Membranen an. Altöle wurden durch mechanische Trennung der Mischemulsionen in Ölabscheidern erhalten.

Die Altöle, Flotate bzw. Retentate wurden mit den Entwässerungsmitteln oder Vergleichssubstanzen gemäß Tabellen 3 und 4 versetzt. Hierzu wurden die Proben mit einem Gitterrührer gerührt, die Entwässerungsprodukte zugegeben und nach Produktzugabe 5 Minuten weitergerührt. Die Endpunktsbestimmung der Produktzugabe erfolgte entweder über die Stromaufnahme des Rührwerks, eine Viskositätsmessung, oder nach der optischen Veränderung der Proben. Nach dem Einrühren der Entwässerungsmittel wurden die Proben entweder für 24 Stunden stehengelassen oder mit einer Laborzentrifuge für eine Dauer von 5 Minuten bei einer Umdrehungszahl von 4000 Umdrehungen pro Minute zentrifugiert. Der Volumenanteil der sich hierdurch abscheidenden Ölphase wurde ermittelt. Er ist in Tabelle 3 enthalten. Die Ölphase war in der Regel unterlagert von einer Mischphase und/oder einer Wasserphase, die im praktischen Falle gegebenenfalls einer weiteren Aufarbeitung zuzuführen sind, beispielsweise durch Rückführung in die Primärspaltung oder in die Membranfiltration. Vor dem Entwässerungsschritt wurde der Wassergehalt der Proben ermittelt. Ebenso wurde der Wassergehalt der nach der Entwässerung erhaltenen Ölphase ermittelt. Die Bestimmung der Wassergehalte erfolgte dadurch, daß ein 10-g-Muster der Proben durch Einwirkung von Mikrowellen bis zur Gewichtskonstanz eingedampft wurde.

Zum Vergleich wurden alle Proben ohne eine Zugabe von Entwässerungsmitteln entsprechend Tabelle 3 physikalisch behandelt, d. h. bei den angegebenen Temperaturen stehen gelassen oder zentrifugiert. In keinem Fall war eine Abscheidung einer ölreichen Oberphase von mehr als 5 % zu erkennen.

**Tabelle 1**

| **Erfindungsgemäße Entwässerungsmittel** |
|---|
| **Gruppe A** |
| a) N-Laurylpyridiniumhydrogensulfat |
| b) Trimethyl(dodecyl)ammoniumchlorid |
| c) Dimethyl(dodecyl)(benzyl)ammoniumchlorid |
| d) N,N-Dimethyl-N-kokosalkylammoniumbetain |

| **Gruppe B** |
|---|
| e) Tertiäres Polyamin gem. Formel (I), X=Cl, Molmasse 75000 (50 % in Wasser) |
| f) Tertiäres Polyamin gem. Formel (I), X=Cl, Molmasse 100000 (50 % in Wasser) |
| g) Quartäres Polyamin gem. Formel (II), X=Cl, Molmasse 200000 (20 % in Wasser) |

**Tabelle 2**

| **Vergleichssubstanzen** | | |
|---|---|---|
| Nr. | Substanz | Vgl.mit |
| V1 | Tetrabutylammoniumchlorid | b, c |
| V2 | N-Propylpyridiniumhydrogensulfat | a |
| V3 | N,N,N-Trimethylammoniumbetain | d |

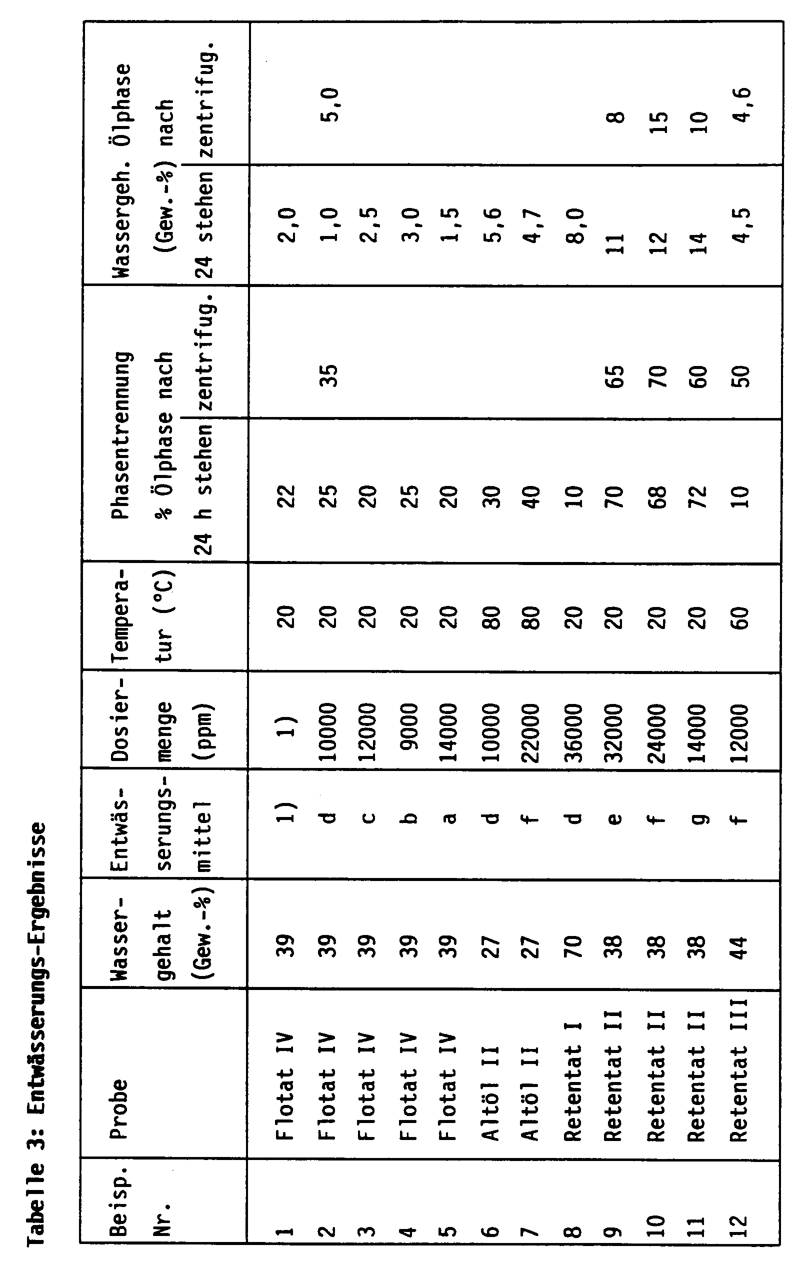

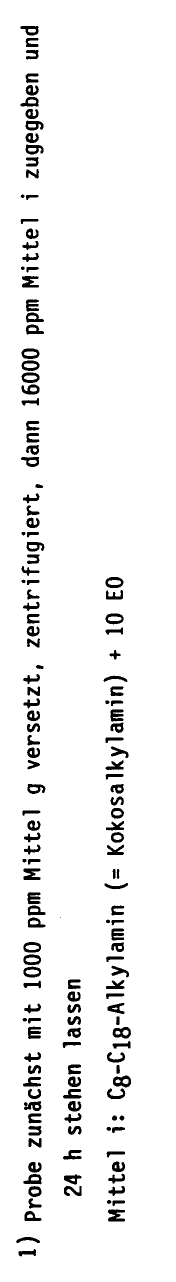

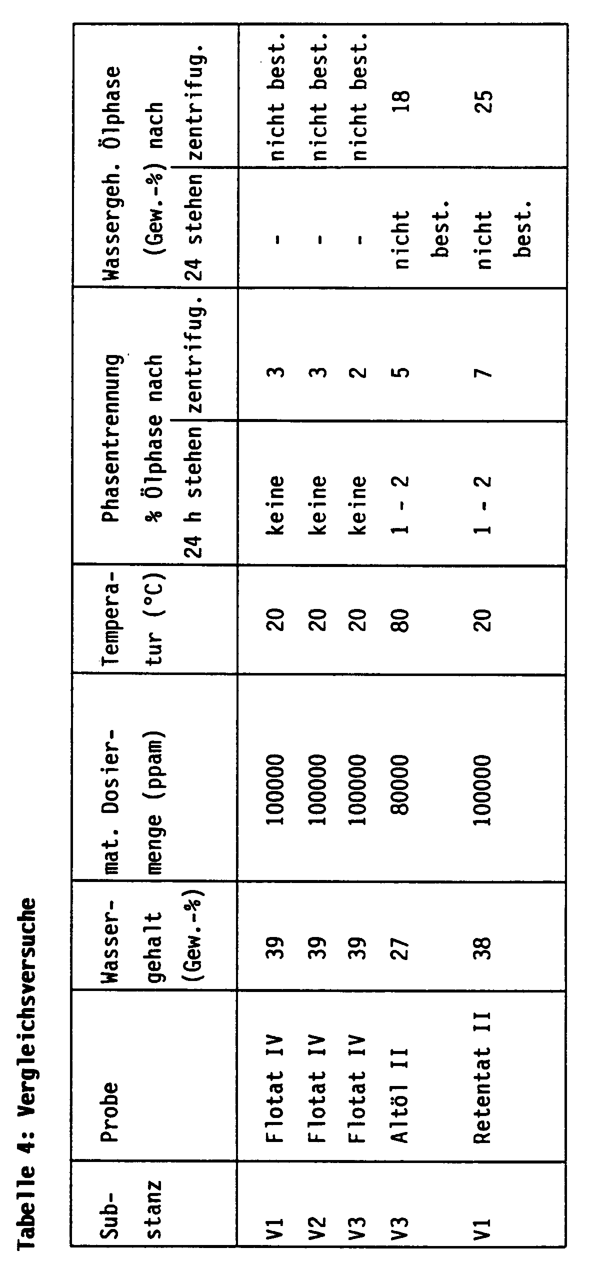

## Patentansprüche

1. Verfahren zur Entwässerung von technischen Altölen, die Wasser-in-Öl-Emulsionen oder Öl-in-Wasser-Emulsionen mit einem Ölgehalt von größer als 15 Gew.-% darstellen und bei der Aufarbeitung technischer Öl-in-Wasser-Emulsionen durch Aufrahmung in einer mechanischen Abscheidevorrichtung, durch Anreicherung mittels Membranfiltrationsprozesse oder durch Primärspaltung als ölreiche Phase anfallen, dadurch gekennzeichnet, daß man eine oder mehrere kationische Aminverbindungen aus den Gruppen
A) Quartäre Pyridinium- oder Ammoniumsalze oder Betaine mit mindestens einem Alkylrest mit 6 bis 22 C-Atomen,
B) Tertiare oder quarternäre Polyamine mit mittleren Molmassen zwischen 50 000 und 250 000 Dalton
in der Emulsion verteilt und eine Phasentrennung herbeiführt.

2. Verfahren nach Anspruch 1, dadurch gekennzeichnet, daß die Verbindungen aus der Gruppe A) ausgewählt sind aus N-Alkylpyridiniumsalzen mit einem Alkylsubstituenten mit 10 bis 16 C-Atomen, Trimethylalkylammoniumsalzen mit einem Alkylrest mit 10 bis 18 C-Atomen, Dimethylbenzylalkylammoniumsalzen mit einem Alkylrest mit 10 bis 16 C-Atomen, Dimethyldialkylammoniumsalzen mit zwei gleichen oder unterschiedlichen Alkylresten mit jeweils 6 bis 12 C-Atomen sowie Dimethylalkylammoniumbetainen mit einem Alkylrest mit 8 bis 18 C-Atomen.

3. Verfahren nach einem oder beiden der Ansprüche 1 und 2, dadurch gekennzeichnet, daß die Verbindungen aus der Gruppe B) ausgewählt sind aus Polymeren mit den Baugruppen 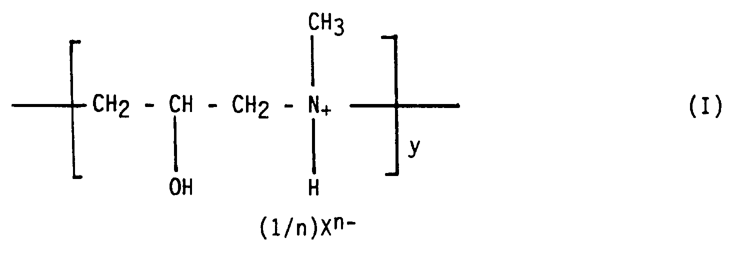 und/oder 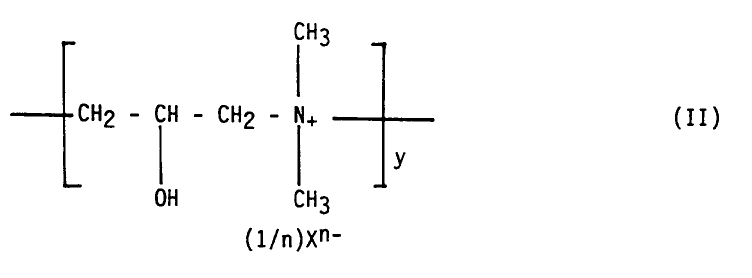 wobei Xⁿ⁻ ein einfach, zweifach oder dreifach negativ geladenes, vorzugsweise anorganisches, Anion bedeutet.

4. Verfahren nach einem oder mehreren der Ansprüche 1 bis 3, dadurch gekennzeichnet, daß man Entwässerungsmittel der Gruppe(n) A) und/oder B) kombiniert mit Ethoxylierungsprodukten von Fettaminen oder Fettalkoholen mit 10 bis 18, vorzugsweise 12 bis 16 C-Atomen mit 5 bis 29 Mol Ethylenoxid und aus Ethoxylierungs-/Propoxylierungsprodukten von Fettaminen oder Fettalkoholen mit 10 bis 18, vorzugsweise 10 bis 16 C-Atomen mit 4 bis 10 Mol Ethylenoxid gefolgt von 1 bis 4 Mol Propylenoxid, wobei es sich bei den Fettalkoholen oder Fettaminen vorzugsweise um gesättigte Verbindungen und um Produktgemische handelt, wie sie aus natürlichen Fetten und Ölen erhalten werden, und die Alkylenoxidketten mit konventioneller oder mit eingeengter Homologenverteilung vorliegen.

5. Verfahren nach einem oder mehreren der Ansprüche 1 bis 3, dadurch gekennzeichnet, daß man Entwässerungsmittel der Gruppe(n) A) und/oder B) kombiniert mit einem oder mehreren der Mittel: Polymere und/oder Oligomere aus Ethylenoxid und/oder 1,2-Propylenoxid, oxalkylierte Phenolharze, mit Diisocyanaten, Dicarbonsäuren, Formaldehyd und/oder Diglycidether vernetzte Block- oder Mischpolymere von Ethylen- und 1,2-Propylenoxid, Polyetherurethane.

6. Verfahren nach einem oder mehreren der Ansprüche 1 bis 5, dadurch gekennzeichnet, daß man die Entwässerungsmittel in Gesamtkonzentrationen zwischen 5 ppm und 60 000 ppm, vorzugsweise zwischen 100 ppm und 30 000 ppm, bezogen auf die Gesamtmenge der zu entwässernden Flüssigkeit, einsetzt.

7. Verfahren nach einem oder mehreren der Ansprüche 1 bis 6, dadurch gekennzeichnet, daß man die Entwässerung bei Temperaturen zwischen 15 und 95 °C, vorzugsweise zwischen 20 und 80 °C durchführt.

8. Verfahren nach einem oder mehreren der Ansprüche 1 bis 7, dadurch gekennzeichnet, daß es sich bei dem zu entwässernden Altöl um eine Wasser-in-Öl-Emulsion handelt, die durch Primärspaltung einer Öl-in-Wasser-Emulsion erhalten wurde.

9. Verfahren nach Anspruch 8, dadurch gekennzeichnet, daß man nach der Vermischung des Entwässerungsmittels mit der Emulsion eine Phasentrennung durch Zentrifugieren durchführt.

## Claims

1. A process for dewatering industrial spent oils in the form of water-in-oil emulsions or oil-in-water emulsions with an oil content of greater than 15% by weight which accumulate as an oil-rich phase in the working up of industrial oil-in-water emulsions by creaming in a mechanical separator, by concentration using membrane filtration processes or by primary demulsification, characterized in that one or more cationic amine compounds from the following groups:
A) quaternary pyridinium or ammonium salts or betaines containing at least one C₆₋₂₂ alkyl group,
B) tertiary or quaternary polyamines with average molecular weights of 50,000 to 250,000 dalton
is/are dispersed in the emulsion to induce phase separation.

2. A process as claimed in claim 1, characterized in that the compounds of group A) are selected from N-alkyl pyridinium salts containing a C₁₀₋₁₆ alkyl substituent, trimethyl alkyl ammonium salts containing a C₁₀₋₁₈ alkyl group, dimethyl benzyl alkyl ammonium salts containing a C₁₀₋₁₆ alkyl group, dimethyl dialkyl ammonium salts containing two identical or different C₆₋₁₂ alkyl groups and dimethyl alkyl ammonium betaines containing a C₈₋₁₈ alkyl group.

3. A process as claimed in one or both of claims 1 and 2, characterized in that the compounds of group B) are selected from polymers containing the following groups: 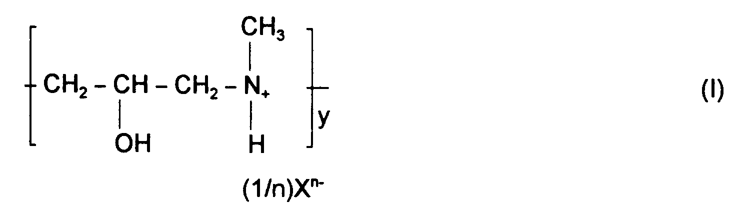 and/or 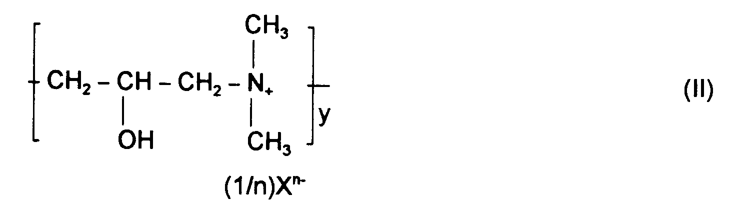 where Xⁿ⁻ is a preferably inorganic ion carrying one, two or three negative charges.

4. A process as claimed in one or more of claims 1 to 3, characterized in that dewatering agents of group(s) A) and/or B) are combined with ethoxylation products of C₁₀₋₁₈ and preferably C₁₂₋₁₆ fatty amines or fatty alcohols with 5 to 29 moles of ethylene oxide and with ethoxylation/propoxylation products of C₁₀₋₁₈ and preferably C₁₀₋₁₆ fatty amines or fatty alcohols with 4 to 10 moles of ethylene oxide followed by 1 to 4 moles of propylene oxide, the fatty alcohols or fatty amines preferably being saturated compounds or product mixtures of the type obtained from natural fats and oils and the alkylene oxide chains having a conventional or narrow homolog distribution.

5. A process as claimed in one or more of claims 1 to 3, characterized in that dewatering agents of group(s) A) and/or B) are combined with one or more of the following agents: polymers and/or oligomers of ethylene oxide and/or 1,2-propylene oxide, alkoxylated phenolic resins, block polymers or copolymers of ethylene and 1,2-propylene oxide crosslinked with diisocyanates, dicarboxylic acids, formaldehyde and/or diglycidyl ether and polyether urethanes.

6. A process as claimed in one or more of claims 1 to 5, characterized in that the dewatering agents are used in a total concentration of 5 ppm to 60,000 ppm and preferably in a total concentration of 100 ppm to 30,000 ppm, based on the total quantity of liquid to be dewatered.

7. A process as claimed in one or more of claims 1 to 6, characterized in that dewatering is carried out at temperatures of 15 to 95°C and preferably at temperatures of 20 to 80°C.

8. A process as claimed in one or more of claims 1 to 7, characterized in that the spent oil to be dewatered is a water-in-oil emulsion obtained by primary demulsification of an oil-in-water emulsion.

9. A process as claimed in claim 8, characterized in that phase separation by centrifugation is carried out after the dewatering agent has been mixed with the emulsion.

## Revendications

1. Procédé de déshydratation d'huiles techniques usagées qui représentent des émulsions eau dans l'huile ou huile dans l'eau ayant une teneur en huile supérieure à 15 % en poids et qui résultent du retraitement d'émulsions techniques huile dans l'eau par écrémage dans un dispositif de séparation mécanique, par enrichissement au moyen de processus de filtration sur membrane et par fractionnement primaire, en tant que phase riche en huile,
caractérisé en ce qu'
on disperse dans l'émulsion un ou plusieurs composés d'amine des groupes :
A) sels de pyridinium ou d'ammonium quaternaire ou bétaïnes ayant au moins un radical alkyle de 6 à 22 atomes de C,
B) polyamines tertiaires ou quaternaires ayant des masses molaires moyennes comprises entre 50.000 et 250.000 Dalton
et on réalise une séparation de phases.

2. Procédé selon la revendication 1,
caractérisé en ce qu'
on choisit les composés du groupe A) parmi des sels de N-alkylpyridinium ayant un substituant d'alkyle de 10 à 16 atomes de C, des sels de triméthylalkylammonium ayant un radical alkyle de 10 à 18 atomes de C, des sels de diméthylbenzylalkylamonium ayant un radical alkyle de 10 à 16 atomes de C, des sels de diméthyldialkylammonium avec deux radicaux alkyle identiques ou différents ayant respectivement 6 à 12 atomes de C ainsi que des diméthylalkylammoniumbétaïnes ayant un radical alkyle de 8 à 18 atomes de C.

3. Procédé selon l'une ou les deux revendications 1 et 2,
caractérisé en ce que
les composés du groupe B sont choisis parmi les polymères ayant des groupes constitutifs, 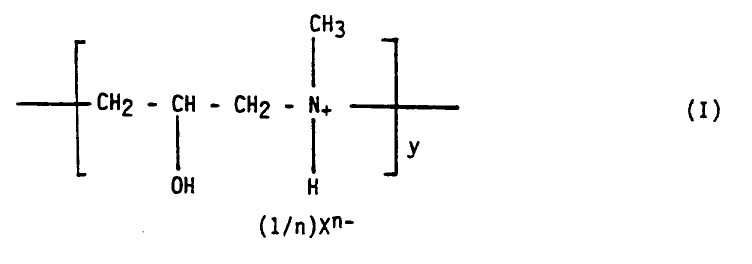 et/ou 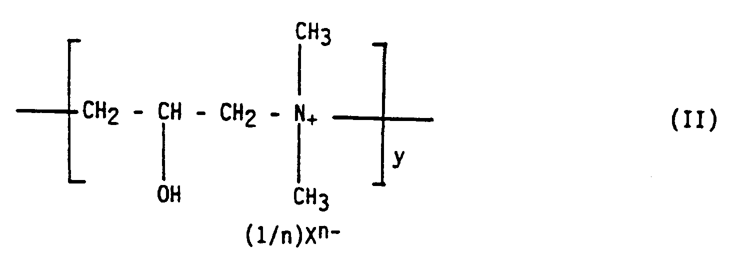 où Xⁿ⁻ représente un anion chargé négativement une fois, deux fois ou trois fois, de préférence minéral.

4. Procédé selon l'une ou plusieurs des revendications 1 à 3,
caractérisé en ce qu'
on combine des produits de déshydratation du ou des groupes A et/ou B) à des produits d'éthoxylation d'amines grasses ou d'alcools gras de 10 à 18, de préférence 12 à 16 atomes de C de 5 à 29 moles d'oxyde d'éthylène et des produits d'éthoxylation/propoxylation d'amines grasses ou d'alcools gras de 10 à 18, de préférence 10 à 16 atomes de C avec 4 à 10 mol d'oxyde d'éthylène puis avec 1 à 4 mol d'oxyde de propylène, tandis que pour des alcools gras ou des amines grasses il s'agit de préférence de composés saturés et de mélanges de produits, tels qu'on peut les obtenir à partir de graisses et d'huiles naturelles, et les chaînes d'oxyde d'alkylène se présentent avec des répartitions d'homologues classiques ou resserrées.

5. Procédé selon l'une ou plusieurs des revendications 1 à 3,
caractérisé en ce qu'
on combine des produits de déshydratation du ou des groupes A) et/ou B) avec un ou plusieurs des produits polymères et/ou oligomères de l'oxyde d'éthylène et/ou de 1,2-oxyde de propylène, résines phénoliques oxyalkylées, des polymères en masse ou des copolymères d'oxyde d'éthylène et 1,2-oxyde de propylène réticulés par des diisocyanates, des acides dicarboxyliques, du formaldéhyde et/ou des éthers diglycidiques, des polyuréthannes.

6. Procédé selon l'une ou plusieurs des revendications 1 à 5,
caractérisé en ce qu'
on utilise le produit de déshydratation à des concentrations globales comprises entre 5 ppm et 60.000 ppm, de préférence entre 100 ppm et 30.000 ppm, par rapport à la quantité totale du liquide à déshydrater.

7. Procédé selon l'une ou plusieurs des revendications 1 à 6,
caractérisé en ce qu'
on réalise la déshydratation à des températures comprises entre 15 et 95°C, de préférence entre 20 et 80°C.

8. Procédé selon l'une ou plusieurs des revendications 1 à 7,
caractérisé en ce que
pour l'huile usagée à déshydrater il s'agit d'une émulsion eau dans l'huile, qu'on a obtenue par fractionnement primaire d'une émulsion huile dans l'eau.

9. Procédé selon la revendication 8,
caractérisé en ce qu'
on réalise une séparation de phase par centrifugation après mélange du produit de déshydratation avec l'émulsion.
